# EUROPEAN PATENT SPECIFICATION

(11) **EP 3 149 079 B1**
(45) Date of publication and mention of the grant of the patent: **19.07.2023**
(21) Application number: 15727828.4
(22) Date of filing: 28.05.2015
(51) Int. Cl.: C08L 23/08, C09D 177/08, C08L 75/04, G03G 7/00

(54) **PRIMER COATINGS FOR USE ON SUBSTRATES**
GRUNDIERBESCHICHTUNG FÜR SUBSTRATE
COUCHE D'APPRÊT DESTINÉE À ÊTRE UTILISÉE SUR DES SUBSTRATS

(30) Priority: 30.05.2014 US 201462004956 P; 27.05.2015 US 201514722447
(43) Date of publication of application: 05.04.2017
(73) Proprietor: Michelman, Inc., Cincinnati, OH 45236 (US)
(72) Inventor: BREESE, D. Ryan, Cincinnati, OH 45236 (US); COOPER, Robin, Cincinnati, OH 45236 (US); VANDERSTIGGEL, Krist, Cincinnati, OH 45236 (US); GAY, Edward R., Cincinnati, OH 45236 (US); MICHELMAN, Richard, Cincinnati, OH 45236 (US)
(74) Representative: Arnold & Siedsma
(86) International application number: PCT/US2015/032800
(87) International publication number: WO 2015/184046

(56) References cited:
- EP-A1- 2 716 714
- WO-A1-01/88039
- WO-A1-87/00190
- WO-A1-2006/102581
- WO-A1-2010/104626
- US-A- 3 582 507
- US-A- 3 843 576
- US-A1- 2014 127 498

## Description

### TECHNICAL FIELD

Embodiments described herein relate generally to coatings for use on a variety of substrates, and more particularly, to coatings that include an aqueous dispersion of polyamide and a copolymer of ethylene and acrylic acid.

### BACKGROUND

In recent years, the use of on-demand, high-speed digital printing machines utilizing liquid or dry toners or inks in electrophotographic systems has become widespread. Printers using such toners or inks are commercially available from Hewlett-Packard Company under the trade name HP Indigo. However, as liquid toners do not transfer well and/or adhere well to the polymer or paper substrates printed on such presses, the substrates are typically treated with a primer to enhance the adhesion of liquid toners thereto.

A number of primers have been developed for use on substrates such as polymeric films which render the surface of the films more receptive to liquid toners. Typical coatings currently in use have been developed based on ethylene-acrylic acid copolymers. As described in commonly-assigned U.S. Patent No. 7,470,736, one such primer coating includes a copolymer of ethylene and acrylic or methacrylic acid and a compatible adhesion enhancer selected from an aliphatic polyurethane dispersion, a hydrogenated hydrocarbon rosin or rosin ester dispersion, and an amorphous acrylic polymer dispersion. WO 01/88039 A1 discloses polymeric compositions comprising a blend of a copolyamide (20-80 wt.% based on the total weight blend) and a polyolefin that has carboxylic acid or carboxylic acid anhydride functionality. WO 2010/104626 A1 discloses substrates with a multilayer coating that comprises polyamides and ethylene acrylic acid copolymers. The topcoat may be applied as an aqueous dispersion. EP 2 716 714 A1 discloses aqueous dispersions comprising a polyamide-based rubber and a copolymer of an ethylene and a ethylenically unsaturated carboxylic acid.

However, the development of newer, high speed digital presses presents new challenges to the use of such primer coatings with regard to ink transfer and adhesion to the substrate. Accordingly, there is still a need in the art for effective primer coatings for use in such printing presses.

### SUMMARY

The description provides a primer that according to the invention comprises an aqueous dispersion comprising: from about 50% to about 70% by weight polyamide based on solids in the aqueous dispersion; from about 10% to about 20% by weight polyurethane based on solids in the aqueous dispersion; and from about 20% to about 40% by weight ethylene acrylic acid copolymer based on solids in the aqueous dispersion, wherein the aqueous dispersion comprises less than 1 wt % of non-aqueous plasticizers and organic solvents.

Also provided is a method of coating a substrate comprising: applying an aqueous dispersion to the substrate without any intervening coatings, the aqueous dispersion comprising from about 10% to about 50% by weight solids and the balance water and ammonia, wherein the aqueous dispersion comprises less than 1 wt % of non-aqueous plasticizers and organic solvents, wherein the solids comprise a mixture of: from about 50% to about 70% by weight polyamide based on solids in the aqueous dispersion; from about 10% to about 20% by weight polyurethane based on solids in the aqueous dispersion; and from about 20% to about 40% by weight ethylene acrylic acid copolymer based on solids in the aqueous dispersion, and drying the aqueous dispersion on the substrate to form a coating on the substrate.

Also provided is a coated substrate comprising a substrate coated with a primer layer, wherein the primer layer comprises a mixture of: from about 50% to about 70% by weight polyamide based on solids in the aqueous dispersion; from about 10% to about 20% by weight polyurethane based on solids in the aqueous dispersion; and from about 20% to about 40% by weight ethylene acrylic acid copolymer based on solids in the aqueous dispersion, wherein the primer layer has a thickness of from about 0.1 micron to about 1.0 microns.

Accordingly, various embodiments are directed to a primer coating for substrates which include an aqueous dispersion of a polyamide and a copolymer of ethylene and acrylic acid and a polyurethane. These and other features and advantages of various embodiments will become apparent from the following detailed description, and the appended claims.

### DETAILED DESCRIPTION

Reference will now be made in detail to various embodiments of primer coatings that include an aqueous polyamide dispersion. The components of the coating generally include a dispersion of polyamide and a copolymer of ethylene and acrylic acid and a polyurethane. Such coatings may be used as primer coatings for substrates which are printed using a digital printer. Embodiments of the coatings described herein may provide improved bond strength when used as primer coatings. For example, various embodiments may provide enhanced adhesion of liquid toner, dry toner, and/or various inks on substrates coated with the primer which are printed on digital presses, including high speed digital press operation. By high speed, it is meant that the substrate travels at a linear speed of from about 15 meters/min up to about 150 meters/min through the printer. In addition, in various embodiments, the coating does not require the use of any additional primers or precoatings to achieve proper ink or toner adhesion to the substrate. Various embodiments may provide good ink transfer and adhesion, and a non-blocking surface. By non-blocking, it is meant that the coated substrate can be wound upon itself after coating on one surface and can be unwound without causing feeding problems in the printing press. Various embodiments of primer coatings, coated substrates, and methods of coating a substrate using the same will be described.

Unless otherwise indicated, the disclosure of any ranges in the specification and claims are to be understood as including the range itself and also anything subsumed therein, as well as endpoints.

In various embodiments, a primer coating includes an aqueous dispersion including a mixture of a polyamide and a copolymer of ethylene and acrylic acid. As used herein, a "dispersion" refers to a particulate discontinuous phase in a continuous liquid medium. An aqueous dispersion is a dispersion in which the continuous liquid medium is water.

According to the invention, the dispersion mixture includes polyurethane. Various embodiments may also include ammonia or other neutralizers. The balance of the dispersion may be water. The aqueous dispersion are substantially free of non-aqueous plasticizers and organic solvents. By "substantially free," we mean that less than 1 wt% of non-aqueous plasticizers and organic solvents are present.

According to various embodiments, the aqueous dispersion contains from about 10% to about 50% by weight solids. In some embodiments, the aqueous dispersion contains from about 10% to about 30% by weight solids. In other embodiments, the aqueous dispersion contains from about 15% to about 25% by weight solids. The aqueous dispersion in various embodiments contains from about 50% to about 90% by weight water. In some embodiments, the aqueous dispersion contains from about 70% to about 90% by weight water. In still other embodiments, the aqueous dispersion contains from about 75% to about 85% by weight water.

According to the invention, the polyamide is present in an amount from about 50% to about 70% by weight based on the solids. In still other embodiments, the polyamide is present in an amount from about 60% to about 70% by weight based on the solids. By including greater than about 70% polyamide, the dispersion may not be stable and the polyamide may not remain suitably dispersed in the mixture or may result in undesirable optical properties. In various embodiments, the polyamides are highly branched, low molecular weight polyamides based on fatty acids such as oleic acid. Commercially available polyamides suitable for use may include, by way of example and not limitation, those sold under the trade names Macromelt^{®} (available from Henkel) and Platamid^{®} (available from Akrema). The polyamides included in the aqueous dispersion may be hot melt adhesives.

According to various embodiments, the polyamide is an amine-terminated polyamide. In some embodiments, polyamides with other terminal functional groups, such as an acid group, may be used in the dispersion. In such embodiments, the use of a functional-terminated polyamide in the dispersion may result in improved adhesion of the primer coating to the substrate when compared to a dispersion including a "non-functional" polyamide. As used herein, a "non-functional" polyamide refers to a polyamide lacking a chemically reactive functional terminal group. Non-functional polyamides can include, for example, nylon 6,6 or nylon 12. In some embodiments, the use of a functional-terminated polyamide may further provide enhanced flexibility of the coating when compared to a coating including a non-functional polyamide.

As disclosed hereinabove, in some embodiments, the primer coating may also include aliphatic polyurethane. The polyurethane is present in an amount from about 10% to about 20% by weight based on the solids. Suitable polyurethanes for use include, by way of example and not limitation, Dispercoll^{®} U53, U54, and U56, commercially available from Bayer, and NeoRez^{®} 605, commercially available from DSM, which are in the form of an aqueous polyurethane dispersion.

The ethylene acrylic acid copolymer is present in an amount from about 20% to about 40% by weight based on the solids. In embodiments including greater than about 40% ethylene acrylic acid copolymer, the dispersion may not exhibit a suitable water resistance or bond strength once laminated into a flexible packaging structure. However, by including less than about 10% ethylene acrylic acid copolymer, the dispersion may become unstable and, in particular, the polyamide may not remain suitably dispersed. The copolymer may have a number average molecular weight of about 2,000 to about 180,000. In various embodiments, the copolymer includes from about 65% to about 80% by weight ethylene comonomers and from about 10% to about 35% acrylic acid comonomers. However, in some embodiments, the copolymer includes from about 10% to about 30% acrylic acid comonomers. In still other embodiments, the copolymer includes from about 15% to about 20% acrylic acid comonomers.

Without being bound by theory, it is believed that the ethylene acrylic acid copolymer acts as a polymeric surfactant to maintain the polyamide in dispersion. Conventionally, polyamides are difficult to disperse in water. However, in the embodiments described herein, the combination of ethylene acrylic acid copolymer with polyamide enables a stable water-based dispersion.

According to some embodiments, the copolymer may be prepared as a dispersion by heating the solid copolymer with a water phase in a pressure reactor in the presence of a base, such as ammonia. In some embodiments, ammonia is included in amounts of about 0.1% to 2.0% by weight. Ammonia, in either its anhydrous or aqueous form, can be added to neutralize part or all of the acidic portion of the ethylene acrylic acid copolymer. The copolymer may be melted by heating the copolymer to a temperature from about 75 °C to about 190 °C at a pressure from about 300 psi to about 800 psi. The base reacts with the acid groups on the copolymer, and the copolymer forms a dispersion. According to other embodiments, instead of preparing an ethylene acrylic acid copolymer dispersion from scratch, a suitable commercially available copolymer dispersion may be employed. Suitable ethylene acrylic acid dispersions for use include, by way of example and not limitation, Primacor^{®} 5985 and Primacor^{®} 5990, commercially available from Dow Chemical Company.

In other embodiments, ethylene acrylic acid may be added to a reactor in a solid form and dispersed along with the polyamide. While various methods may be employed to form the dispersion, in various embodiments, melt-kneading is used. In some embodiments, a kneader, a Banbury mixer, a single-screw extruder, or a multi-screw extruder may be used. For example, a multi-screw extruder having two or more screws, to which a kneading block can be added at any position of the screws may be used.

In various embodiments, a twin screw extruder includes a base reservoir and an initial water reservoir, each of which includes a pump. Desired amounts of base and an initial amount of water are provided from the base reservoir and the water reservoir, respectively. In various embodiments, the base is ammonia. In some embodiments, the base and water are preheated.

Resin in the form of pellets is fed from a feeder to an inlet of the extruder, where the resin is melted or compounded. In some embodiments, the dispersing agent is added to the resin, while in other embodiments, the dispersing agent is provided separately to the twin screw extruder. In various embodiments, the "resin" is the polyamide and the "dispersing agent" is the ethylene acrylic acid copolymer described hereinabove. As an example, in various embodiments, pellets of ethylene acrylic acid copolymer and pellets of polyamide may be blended together before being fed into the extruder where they are melted and blended together.

The resin melt is then delivered to an emulsification zone of the extruder where the initial amount of water and base is added through an inlet. In some embodiments, the emulsified mixture is further diluted with additional water from the water reservoir in a dilution and cooling zone of the extruder.

In other embodiments, the polyamide, the ethylene acrylic acid copolymer dispersion are combined by a high shear mixing process at ambient conditions. In some embodiments, however, the high shear mixing process may be performed partially or completely under elevated temperature (from about 75 °C to about 190 °C) and pressure (from about 300 psi to about 800 psi).

In various embodiments, the primer coating has a Brookfield dispersion viscosity of less than about 200 cP when measured using a Brookfield #3 spindle at about 20 °C and a rotational speed of about 60 rpm. When the viscosity is greater than about 200 cP, the primer coating may be difficult to apply as an even coating.

The resulting primer coating is applied to a substrate in any suitable manner including gravure coating, roll coating, wire rod coating, flexographic printing, spray coating, screen printing, and the like. Substrates can include, by way of example and not limitation, cellulosic substrates as well as polymeric substrates including biaxially oriented polyethylene terepthalate (BOPET), biaxially oriented polypropylene (BOPP), polyethylene, an AlOₓ or SiOₓ coated polymeric film, polylactic acid (PLA), polyhydroxyalkanoate (PHA), polypropylene, biaxially oriented polypropylene (BOPP), biaxially oriented polyamide, nylon, or polyvinyl chloride. Other substrates may include, for example, fiber, wood, metal, glass, nonwoven fabric, aluminum foil, a metallized polymeric film, a metallized paper, and the like. In some embodiments, such as where the substrate has a low surface energy (less than about 40 dynes/cm), the substrate surface may be treated with a flame treatment or corona discharge treatment prior to coating. In such embodiments, the primer coating may exhibit improved adhesion to the treated substrate as compared to a substrate of the same material not treated with the flame treatment or corona discharge treatment.

After the coating is applied, it may be dried by hot air, radiant heat, or any other suitable means which provides a clear, adherent coated film. The coating is applied to a substrate such that upon drying, the coating forms a smooth, evenly distributed layer of from about 0.1 micron to about 1.0 microns in thickness. In some embodiments, the coating forms a smooth, evenly distributed layer of from about 0.3 to 1.0 microns in thickness. Other coating thicknesses may be employed, provided they yield the desired printability and adhesion properties to the imaging compositions such as for example liquid toner ink and the substrate. In various embodiments, the primer layer is coated directly on the substrate. For example, the primer layer is coated on the substrate without any intervening coatings or layers being applied between the primer layer and the surface of the substrate.

It should be understood that various embodiments provide a single coating that includes polyamide and ethylene acrylic acid copolymer and polyurethane. Conventionally, ethylene acrylic acid copolymers and polyamide were provided in separate layers to obtain the functional advantages of each of the components. For example, ethylene acrylic acid copolymer exhibits good adhesion to ink, but by itself does not adhere well to polymeric substrates. While polyamide exhibits good adhesion to polymeric substrates, because of difficulties in forming a stable aqueous dispersion, it is conventionally dispersed in solvent, especially organic solvents which can lead to environmental problems when the solvent evaporates. Alternatively, polyamide may be extruded onto the substrate as a film. However, the thickness of an extruded film (with or without additional coating layers, such as a coating including ethylene acrylic acid copolymer) will typically several up to about 10 microns which may be limiting in various flexible packaging implementations. For example, a thinner coating can reduce the total thickness of the flexible packaging, may reduce costs associated with manufacturing and shipping, and may enable other coatings to be employed to provide other advantages, such as puncture-resistance, without adversely affecting the flexibility of the packaging.

Moreover, various embodiments provide enhanced water resistance when compared to other primer coatings, such as coatings including polyethylene imide.

It should be appreciated that a lamination adhesive may be used in conjunction with the primer coating as described above. For example, after the primer has been applied and dried, the primer coated polymer substrate may then be printed using a digital press and liquid toner/ink. A lamination adhesive may be applied to the primed/printed substrate surface prior to lamination to a second polymeric substrate. In various embodiments, when a primed and printed substrate is laminated to a second substrate, the bond strength is sufficient to cause the ink layer to fail cohesively, i.e., the bond strength between the primer and ink and the ink to the lamination adhesive is greater than the internal strength of the ink layer, such that the ink layer split and was observed on both substrates of the lamination.

In order that various aspects may be more readily understood, reference is made to the following examples which are not forming part of the invention and are intended for illustrative purposes only.

### Example 1 (not forming part of the invention)

A biaxially oriented polyethylene terephthalate (BOPET) film having a thickness of 12 microns was coated with various coat weights of a primer composition comprising an aqueous dispersion of 70% polyamide and 30% EAA off line on a Digilam coating/laminating unit manufactured by AB Graphics International Ltd., which consists of a direct gravure anilox roll, smoothing bar and three ovens. The anilox used was 160 lines/cm, 2.4 ml/m². The smoothing bar was utilized, rotating in the direction opposite of the web direction and set at 105% of the line speed. The coated film was then dried in for successive ovens set at 100 °C, 87 °C, 54 °C, and 32 °C respectively. The web was coated at a line speed of 50 ft/min.

The primer coating was an aqueous dispersion having 15% by weight total solids. The solids included 70% Macromelt^{®} polyamide (Henkel Corp., Connecticut), and 30% Primacor^{®} EAA (Dow Chemical Company, Michigan), by weight on a solids basis.

After the film was primed, it was printed using HP Electroink on a HP Indigo WS6600 press. The film was printed with a blanket temperature of 105 °C. The printed film was immediately tested for ink adhesion via the standard HP-Indigo tape test. The tape test consists of applying 3M 810 adhesive tape to the ink surface. A 2 kg roller is then passed over the tape 4 times. The tape is then pulled by hand parallel to the plane of the substrate at as rapid of a rate possible. The percentage of ink remaining on the printed substrate is then recorded. In all cases, print blocks #19-24 of the standard HP-Indigo test print pattern were evaluated as they have the heaviest ink coverage and are the most susceptible to poor ink adhesion. The samples were then submerged under water for 30 minutes, as well 24 hours, then patted dry and immediately tested via the aforementioned standard HP-Indigo tape test. Table 1 shows that at primer coat weights between 1.43 and 0.43 dry grams per square inch (gsm) showed 100% ink adhesion to the primer in immediate (dry), 30 minute water submersion and 24 hour water submersion testing. The primer coatings had a thickness between 1.43 and 0.43 mm (i.e., 1 gsm is equivalent to 1 mm thickness).

| **Table 1: Ink Adhesion Over Time** | | | | |
|---|---|---|---|---|
| **% TS** | **Coat Weight (gsm)** | **Initial Ink Adhesion** | **Adhesion after 30 minutes of water submersion** | **Adhesion after 24 hours of water submersion** |
| 27.1 | 1.43 | 100% | 100% | 100% |
| 21.2 | 0.90 | 100% | 100% | 100% |
| 15.4 | 0.67 | 100% | 100% | 100% |
| 11.8 | 0.43 | 100% | 100% | 100% |

As shown in Table 1, the primer coating demonstrates excellent adhesion to HP Indigo inks when subjected to an ink adhesion tape test after application to paper substrates as well as polymeric substrates including biaxially oriented polyethylene terepthalate (BOPET), biaxially oriented polypropylene (BOPP), and polyethylene. By "excellent adhesion," it is meant that at least 85% of the printed ink adheres to the substrate when subjected to such tape testing. Experiments have shown that biaxially oriented polyethylene terephthalate coated with 0.5 gsm (dry) of the primer coating passed 100% of all tape tests including the use of 3M 800 label tape, 3M 610 tape, masking tape, and packing tape. Moreover, Table 1 demonstrates that the excellent adhesion is observable both immediately after printing in a dry environment, as well as after submersion in water for both short (30 minutes) and long time (24 hours) periods.

### Example 2 (not forming part of the invention)

A biaxially oriented polyethylene terephthalate (BOPET) film having a thickness of 12 microns was primed using a primer coating in an amount of 0.3 dry gsm having 70% polyamide and 30% ethylene acrylic acid copolymer, printed, and then coated with a thermal lamination adhesive at a coat weight of 3.0 dry gsm. The printed and coated film web was then thermally laminated to a blown low linear density polyethylene (LLDPE) film having a thickness of 75 microns (Laminate A). The films were laminated together at 60 °C at a speed of 1.5 meters per minute on a ChemInstruments hot roll laminator (Model HL-100). A control sample (Laminate B) was also produced with the same films in an identical configuration but using a conventional two-component water-based adhesive obtained from Dow Chemical Company (ROBOND^{™} L330 with 2% isocyanate co-catalyst). These films were also laminated at 60 °C at a speed of 1.5 meters per minute. The laminates were tested for ink transfer failure upon deconstruction of the laminate, and the results are shown in Table 2 below.

In Table 2, the designation "NT" indicates no ink was transferred from the printed web to the sealant web upon deconstruction of the laminate or that there was a lack of adhesion of ink to the adhesive and/or a lack of adhesion of the adhesive to the sealant film and/or a cohesive failure of the adhesive layer. The designation "PT" indicates a partial transfer of ink from the printed substrate to the sealant substrate upon laminate deconstruction. "FT" indicates full transfer of the ink from the printed substrate to the sealant substrate when the laminate is deconstructed or that the bond strength of the adhesive to the ink is greater than the bond strength of the ink to the print web. "IS" indicates that the ink split or that there was a cohesive failure of the ink layer.

| **Table 2: Ink Transfer Failure Upon Deconstruction of Laminates** | | |
|---|---|---|
| | **Laminate A** | **Laminate B** |
| **Ink Coverage** | **Failure** | **Failure** |
| 100% magenta; 100% black | IS | 50% PT |
| 100% magenta | IS | NT |
| 100% cyan; 100% magenta | IS | 5% PT |
| 100% cyan | 5% PT | NT |
| 100% yellow; 100% cyan | IS | NT |
| 100% yellow | BOPET tear | NT |

As shown in Table 2, when a primed and printed substrate is laminated to a second substrate, the bond strength is sufficient to cause the ink layer to fail cohesively, i.e., the bond strength between the primer and ink and the ink to the lamination adhesive is greater than the internal strength of the ink layer, such that the ink layer split and was observed on both substrates of the lamination.

Accordingly, when used as a primer for enhancing the ink adhesion in digital printing applications, various aspects may provide increased bond strength between digital printing inks and the substrate to which they are printed on. In addition, the bond strength between the primer coating and the substrate is strong. Additionally, in various aspects, when a primed and printed substrate is laminated to a second substrate, the bond strength is sufficient to cause the ink layer to fail cohesively, i.e., the bond strength between the primer and ink and the ink to the lamination adhesive is greater than the internal strength of the ink layer, such that the ink layer split and was observed on both substrates of the lamination. Various aspects demonstrate that by combining a polyamide with an ethylene acrylic acid copolymer the resultant print receptive coating may be used to enhance the adhesion of waterbased inks, offset lithographic inks, and dry and liquid toners for use in electrostatic printing. Other advantages will be appreciated by one skilled in the art.

According to the invention, the disclosure provides a primer that includes an aqueous dispersion comprising: from about 50% to about 70% by weight polyamide based on solids in the aqueous dispersion; from about 10% to about 20% by weight polyurethane based on solids in the aqueous dispersion; and from about 20% to about 40% by weight ethylene acrylic acid copolymer based on solids in the aqueous dispersion, wherein the aqueous dispersion comprises less than 1 wt % of non-aqueous plasticizers and organic solvents.

The aqueous dispersion may further include

The primer comprises an aqueous dispersion that may include from about 10% to about 50% by weight solids and from about 50% to about 90% by weight water.

The primer coating may have a Brookfield dispersion viscosity of less than about 200 cps.

The copolymer of ethylene and acrylic acid may include from about 65% to about 90% ethylene comonomers and from about 10% to about 35% acrylic acid comonomers.

The polyamide may be an amine-terminated polyamide.

The disclosure also provides a method of coating a substrate. The method includes applying an aqueous dispersion to the substrate without any intervening coatings, the aqueous dispersion comprising from about 10% to about 50% by weight solids and the balance water and ammonia, wherein the aqueous dispersion comprises less than 1 wt % of non-aqueous plasticizers and organic solvents, wherein the solids comprise a mixture of: from about 50% to about 70% by weight polyamide based on solids in the aqueous dispersion; from about 10% to about 20% by weight polyurethane based on solids in the aqueous dispersion; and from about 20% to about 40% by weight ethylene acrylic acid copolymer based on solids in the aqueous dispersion, and drying the aqueous dispersion on the substrate to form a coating on the substrate.

In an embodiment of the method the coating has a thickness from about 0.1 micron to about 1.0 microns.

The polyamide may be amine-terminated polyamide.

The substrate may be selected from the group consisting of aluminum foil, a metallized polymeric film, a metallized paper, an AlOₓ or SiOₓ coated polymeric film polyethylene terepthalate, polylactic acid (PLA), polyhydroxyalkanoate (PHA), biaxially oriented polyethylene terepthalate (BOPET), polypropylene, biaxially oriented polypropylene (BOPP) polyethylene, biaxially oriented polyamide, nylon, or polyvinyl chloride, paper, fiber, wood metal, glass, and nonwoven fabric.

The disclosure provides also a coated substrate comprising a substrate coated with a primer layer, wherein the primer layer comprises a mixture of: from about 50% to about 70% by weight polyamide based on solids in the aqueous dispersion; from about 10% to about 20% by weight polyurethane based on solids in the aqueous dispersion; and from about 20% to about 40% by weight ethylene acrylic acid copolymer based on solids in the aqueous dispersion, wherein the primer layer has a thickness of from about 0.1 micron to about 1.0 microns.

The polyamide may be an amine-terminated polyamide.

The substrate may be from the group consisting of aluminum foil, a metallized polymeric film, a metallized paper, an AlOₓ or SiOₓ coated polymeric film, polyethylene terepthalate, polylactic acid (PLA), polyhydroxyalkanoate (PHA), biaxially oriented polyethylene terepthalate (BOPET), polypropylene, biaxially oriented polypropylene (BOPP), polyethylene, biaxially oriented polyamide, nylon, or polyvinyl chloride, paper, fiber, wood, metal, glass, and nonwoven fabric.

## Claims

1. A primer comprising:
an aqueous dispersion comprising:
from 50% to 70% by weight polyamide based on solids in the aqueous dispersion;
from 10% to 20% by weight polyurethane based on solids in the aqueous dispersion; and
from 20% to 40% by weight ethylene acrylic acid copolymer based on solids in the aqueous dispersion,
wherein the aqueous dispersion comprises less than 1 wt % of non-aqueous plasticizers and organic solvents.

2. The primer of claim 1, wherein the aqueous dispersion comprises from 10% to 50% by weight solids and from 50% to 90% by weight water.

3. The primer of claim 1, wherein the primer coating has a Brookfield dispersion viscosity of less than about 200 cps, when measured using a Brookfield #3 spindle at 20° C and a rotational speed of 60 rpm.

4. The primer of claim 1, wherein the copolymer of ethylene and acrylic acid comprises from 65% to 90% ethylene comonomers and from 10% to 35% acrylic acid comonomers.

5. The primer of claim 1, wherein the polyamide is an amine-terminated polyamide.

6. A method of coating a substrate comprising:
applying an aqueous dispersion to the substrate without any intervening coatings, the aqueous dispersion comprising from 10% to 50% by weight solids and the balance water and ammonia, wherein the aqueous dispersion comprises less than 1 wt % of non-aqueous plasticizers and organic solvents, wherein the solids comprise a mixture of:
from 50% to 70% by weight polyamide based on solids in the aqueous dispersion;
from 10% to about 20% by weight polyurethane based on solids in the aqueous dispersion; and
from 20% to 40% by weight ethylene acrylic acid copolymer based on solids in the aqueous dispersion, and
drying the aqueous dispersion on the substrate to form a coating on the substrate.

7. The method of claim 6, wherein the polyamide is an amine-terminated polyamide.

8. A coated substrate comprising a substrate coated with a primer layer, wherein the primer layer comprises a mixture of:
from 50% to 70% by weight polyamide based on solids in the aqueous dispersion;
from 10% to 20% by weight polyurethane based on solids in the aqueous dispersion; and
from 20% to 40% by weight ethylene acrylic acid copolymer based on solids in the aqueous dispersion,
wherein the primer layer has a thickness of from 0.1 micron to 1.0 microns.

9. The coated substrate of claim 8, wherein the polyamide is an amine-terminated polyamide.

10. The coated substrate of claim 8, wherein the substrate is selected from the group consisting of aluminum foil, a metallized polymeric film, a metallized paper, an AlOₓ or SiOₓ coated polymeric film, polyethylene terepthalate, polylactic acid (PLA), polyhydroxyalkanoate (PHA), biaxially oriented polyethylene terepthalate (BOPET), polypropylene, biaxially oriented polypropylene (BOPP), polyethylene, biaxially oriented polyamide, nylon, or polyvinyl chloride, paper, fiber, wood, metal, glass, and nonwoven fabric.

## Patentansprüche

1. Ein Haftvermittler (Primer), aufweisend:
eine wässrige Dispersion, aufweisend:
von 50% bis 70% Gewichtsanteil Polyamid bezogen auf die Feststoffe in der wässrigen Dispersion;
von 10% bis 20% Gewichtsanteil Polyurethan, bezogen auf die Feststoffe in der wässrigen Dispersion; und
von 20% bis 40% Gewichtsanteil Ethylen-Acrylsäure-Copolymer, bezogen auf die Feststoffe in der wässrigen Dispersion,
wobei die wässrige Dispersion weniger als 1 Gew.-% nicht-wässrige Weichmacher und organische Lösungsmittel aufweist.

2. Der Haftvermittler (Primer) nach Anspruch 1, wobei die wässrige Dispersion von 10% bis 50% Gewichtsanteil der Feststoffe und von 50% bis 90% Gewichtsanteil des Wassers aufweist.

3. Der Haftvermittler (Primer) nach Anspruch 1, wobei die Haftvermittlerbeschichtung (Primerbeschichtung) eine Brookfield-Dispersionsviskosität von weniger als etwa 200 cps aufweist, gemessen mit einer Brookfield-Spindel #3 bei 20° C und einer Rotationsgeschwindigkeit von 60 U/min.

4. Der Haftvermittler (Primer) nach Anspruch 1, wobei das Copolymer aus Ethylen und Acrylsäure 65 % bis 90 % Ethylencomonomere und 10 % bis 35 % Acrylsäurecomonomere aufweist.

5. Der Haftvermittler (Primer) nach Anspruch 1, wobei das Polyamid ein aminterminiertes Polyamid ist.

6. Ein Verfahren zum Beschichten eines Substrats, aufweisend:
Aufbringen einer wässrigen Dispersion auf das Substrat ohne jegliche dazwischenliegenden Beschichtungen, die wässrige Dispersion aufweisend von 10% bis 50% Gewichtsanteil Feststoffe und den Rest Wasser und Ammoniak, wobei die wässrige Dispersion weniger als 1 Gew.-% von nicht-wässrigen Weichmachern und organischen Lösungsmitteln aufweist, wobei die Feststoffe folgende Mischung aufweist:
von 50% bis 70% Gewichtsanteil Polyamid, bezogen auf die Feststoffe in der wässrigen Dispersion;
von 10% bis 20% Gewichtsanteil Polyurethan, bezogen auf die Feststoffe in der wässrigen Dispersion; und
von 20% bis 40% Gewichtsanteil Ethylen-Acrylsäure-Copolymer, bezogen auf die Feststoffe in der wässrigen Dispersion, und
Trocknen der wässrigen Dispersion auf dem Substrat, um eine Beschichtung auf dem Substrat zu bilden.

7. Das Verfahren nach Anspruch 6, wobei das Polyamid ein aminterminiertes Polyamid ist.

8. Ein beschichtetes Substrat, aufweisend ein mit einer Haftschicht (Primerschicht) beschichtetes Substrat, wobei die Haftschicht folgende Mischung aufweist:
von 50% bis 70% Gewichtsanteil Polyamid bezogen auf die Feststoffe in der wässrigen Dispersion;
von 10% bis 20% Gewichtsanteil Polyurethan, bezogen auf die Feststoffe in der wässrigen Dispersion; und
von 20% bis 40% Gewichtsanteil Ethylen-Acrylsäure-Copolymer, bezogen auf den Feststoff in der wässrigen Dispersion,
wobei die Grundierungsschicht eine Dicke von 0,1 Mikrometer bis 1,0 Mikrometer aufweist.

9. Das beschichtete Substrat nach Anspruch 8, wobei das Polyamid ein aminterminiertes Polyamid ist.

10. Das beschichtete Substrat nach Anspruch 8, wobei das Substrat ausgewählt ist aus der Gruppe bestehend aus Aluminiumfolie, einem metallisierten Polymerfilm, einem metallisierten Papier, einem AlOx- oder SiOx-beschichteten Polymerfilm, Polyethylenterepthalat, Polymilchsäure (PLA), Polyhydroxyalkanoat (PHA), biaxial orientiertem Polyethylenterepthalat (BOPET), Polypropylen, biaxial orientiertem Polypropylen (BOPP), Polyethylen, biaxial orientiertem Polyamid, Nylon oder Polyvinylchlorid, Papier, Fasern, Holz, Metall, Glas und Vliesstoff.

## Revendications

1. Apprêt comprenant :
une dispersion aqueuse comprenant :
de 50 % à 70 % en poids d'un polyamide sur la base des matières solides dans la dispersion aqueuse ;
de 10 % à 20 % en poids d'un polyuréthane sur la base des matières solides dans la dispersion aqueuse ; et
de 20 % à 40 % en poids d'un copolymère d'éthylène et d'acide acrylique sur la base des matières solides dans la dispersion aqueuse,
dans lequel la dispersion aqueuse comprend moins de 1 % en poids de plastifiants non aqueux et de solvants organiques.

2. Apprêt selon la revendication 1, dans lequel la dispersion aqueuse comprend de 10 % à 50 % en poids de matières solides et de 50 % à 90 % en poids d'eau.

3. Apprêt selon la revendication 1, dans lequel le revêtement d'apprêt présente une viscosité de dispersion Brookfield inférieure à environ 200 cps, quand elle est mesurée au moyen d'une broche #3 Brookfield à 20 C et à une vitesse de rotation de 60 tr/min.

4. Apprêt selon la revendication 1, dans lequel le copolymère d'éthylène et d'acide acrylique comprend de 65 % à 90 % de comonomères d'éthylène et de 10 % à 35 % de comonomères d'acide acrylique.

5. Apprêt selon la revendication 1, dans lequel le polyamide est un polyamide à terminaison amine.

6. Procédé de revêtement d'un substrat comprenant :
l'application d'une dispersion aqueuse sur le substrat sans revêtements intermédiaires, la dispersion aqueuse comprenant de 10 % à 50 % en poids de matières solides et le reste étant de l'eau et de l'ammoniac, dans lequel la dispersion aqueuse comprend moins de 1 % en poids de plastifiants non aqueux et de solvants organiques, dans lequel les matières solides comprennent un mélange de :
de 50 % à 70 % en poids d'un polyamide sur la base des matières solides dans la dispersion aqueuse ;
de 10 % à 20 % en poids d'un polyuréthane sur la base des matières solides dans la dispersion aqueuse ; et
de 20 % à 40 % en poids d'un copolymère d'éthylène et d'acide acrylique sur la base des matières solides dans la dispersion aqueuse, et
le séchage de la dispersion aqueuse sur le substrat pour former un revêtement sur le substrat.

7. Procédé selon la revendication 6, dans lequel le polyamide est un polyamide à terminaison amine.

8. Substrat revêtu comprenant un substrat revêtu d'une couche d'apprêt, dans lequel la couche d'apprêt comprend un mélange de :
de 50 % à 70 % en poids d'un polyamide sur la base des matières solides dans la dispersion aqueuse ;
de 10 % à 20 % en poids d'un polyuréthane sur la base des matières solides dans la dispersion aqueuse ; et
de 20 % à 40 % en poids d'un copolymère d'éthylène et d'acide acrylique sur la base des matières solides dans la dispersion aqueuse,
dans lequel la couche d'apprêt présente une épaisseur de 0,1 micron à 1,0 micron.

9. Substrat revêtu selon la revendication 8, dans lequel le polyamide est un polyamide à terminaison amine.

10. Substrat revêtu selon la revendication 8, dans lequel le substrat est sélectionné dans le groupe constitué par une feuille d'aluminium, un film polymère métallisé, un papier métallisé, un film polymère revêtu d'AlOₓ ou de SiOₓ, un polytéréphtalate d'éthylène, un polyacide lactique (PLA), un polyhydroxyalcanoate (PHA), un polytéréphtalate d'éthylène à orientation biaxiale (BOPET), un polypropylène, un polypropylène à orientation biaxiale (BOPP), un polyéthylène, un polyamide à orientation biaxiale, un nylon, ou un polychlorure de vinyle, un papier, une fibre, un bois, un métal, un verre, et un tissu non tissé.
